## Europäisches Patentamt

## European Patent Office

## Office européen des brevets

(19)

(11) Veröffentlichungsnummer: **0 014 950**
**B1**

(12) **EUROPÄISCHE PATENTSCHRIFT**

(45) Veröffentlichungstag der Patentschrift:
12.05.82

(51) Int. Cl.³: **C 10 K  1/12** // B01D53/14, B01D53/34, B01D15/08

(21) Anmeldenummer: **80100718.8**

(22) Anmeldetag: **13.02.80**

(54) Verfahren zur Rückgewinnung der Salze der Anthrachinon-disulfonsäure aus einem Waschflüssigkeitsstrom.

(30) Priorität: 16.02.79 DE 2906056

(43) Veröffentlichungstag der Anmeldung:
03.09.80 Patentblatt 80/18

(45) Bekanntmachung des Hinweises auf die Patenterteilung:
12.05.82 Patentblatt 82/19

(84) Benannte Vertragsstaaten:
BE DE FR GB IT NL

(56) Entgegenhaltungen:
DE-A-1 642 861
DE-A-2 301 791
DE-A-2 364 267
DE-A-2 552 979
DE-A-2 605 608
DE-C-854 198
FR-A-2 375 280
FR-A-2 387 904
GB-A-948 270
US-A-3 275 548
US-A-4 002 727

(73) Patentinhaber: Linde Aktiengesellschaft,
Abraham-Lincoln-Strasse 21, D-6200 Wiesbaden (DE)

(72) Erfinder: Weber, Günter, Dr., Bergerweg 6,
D-8151 Linden (DE)

(74) Vertreter: Schaefer, Gerhard, Dr., Linde
Aktiengesellschaft Zentrale Patentabteilung,
D-8023 Höllriegelskreuth (DE)

## Verfahren zur Rückgewinnung der Salze der Anthrachinondisulfonsäure aus einem Waschflüssigkeitsstrom

Die Erfindung betrifft ein Verfahren zur Rückgewinnung der Salze der Anthrachinondisulfonsäure (ADA) aus einem Waschflüssigkeits-Teilstrom, gemäß dem Oberbegriff des Patentanspruchs 1.

Als Waschflüssigkeit zur Auswaschung von Schwefelwasserstoff aus diesen enthaltenden Gasen oder Gasgemischen wird beim sogenannten Stretford-Verfahren eine alkalische Lösung von Salzen der Anthrachinondisulfonsäure (ADA) verwendet. Die alkalische Komponente ist gewöhnlich Natriumcarbonat. Zur Beschleunigung gewisser Teilreaktionen wird bei einer moderneren Variante des Stretford-Verfahrens Natriummetavanadat zugesetzt. In einem ersten, verhältnismäßig sehr schnell ablaufenden Reaktionsschritt wird durch Reaktion zwischen dem Schwefelwasserstoff und dem Natriumcarbonat Natriumhydrogensulfid gebildet, aus dem anschließend unter Verminderung der Oxidationsstufe des Vanadins von +5 auf +4 sowie Bildung von Natronlauge elementarer Schwefel freigesetzt wird. Das Salz der Anthrachinondisulfonsäure dient nun dazu, unter Mitwirkung der Natronlauge das Vanadin auf seine ursprüngliche Oxidationsstufe zurückzuführen. Das dadurch reduzierte Salz der Anthrachinondisulfonsäure — im allgemeinen wird das entsprechende Natriumsalz verwendet — wird anschließend durch Zugabe von Sauerstoff, meist in Form von Luft, rückoxidiert. Zusätzlich laufen noch nicht vermeidbare Nebenreaktionen ab, die zum Teil zu unerwünschten Reaktionsprodukten führen. Zu diesen Reaktionsprodukten zählen vor allem Natriumthiosulfat sowie Natriumsulfat, deren Bildung insbesondere auf die Anwesenheit des Natriumhydrogensulfids zurückzuführen ist. Ein gewisser Prozentsatz dieser Salze in der im Anschluß an die Regenerierung immer wieder zurückzuführenden Waschflüssigkeit ist zwar zulässig, bei Überschreiten eines bestimmten Grenzwertes treten jedoch Ausfällungen auf, die zu unerwünschten Verlegungen der Apparatur führen.

Um diese Schwierigkeit zu umgehen, ist bereits vorgeschlagen worden (DE-A-2 364 267), ständig einen Teilstrom der Waschflüssigkeit abzuzweigen und einer Verbrennung bzw. Hochtemperaturhydrolyse in einer nicht oxidierenden Atmosphäre zu unterwerfen. Dabei bildet sich ein Feststoffrückstand, der die unerwünschten Salze enthält, vor allem in Form von Natriumsulfat. Bei der Hydrolyse freigesetzter gasförmiger Schwefelwasserstoff wird in das der Schwefelwasserstoffabtrennung zuzuführende Rohgasgemisch zurückgeführt. Die in der abgezweigten Waschflüssigkeit enthaltenen Salze der Anthrachinondisulfonsäure werden, und darin liegt der Hauptnachteil des bekannten Verfahrens, bei der Hydrolyse ebenfalls zersetzt, und zwar unter Bildung von Kohlenoxiden, Natriumsulfat und Wasser. Dies führt zu einer ständigen Vernichtung der relativ teuren Salze der Anthrachinondisulfonsäure.

Der Erfindung liegt daher die Aufgabe zugrunde, ein Verfahren der eingangs genannten Art bereitzustellen, das es ermöglicht, die wertvollen Salze der Anthrachinondisulfonsäure auf einfache und wirtschaftliche Weise zurückzugewinnen. Weiterhin sollen die dabei durchzuführenden Verfahrensschritte möglichst weitgehend in das Gesamtverfahren integriert sein.

Diese Aufgabe wird durch die im kennzeichnenden Teil des Patentanspruchs 1 genannte Maßnahme gelöst.

Es hat sich gezeigt, daß die Zurückhaltung der Salze der Anthrachinondisulfonsäure auf der makroporösen Struktur der Adsorberharze beruht. Eventuell vorhandene ionenaktive, d. h. zum Ionenaustausch befähigte Gruppen spielen dabei offensichtlich keine Rolle, wie entsprechende Versuche erwiesen haben. Derartige makroporöse Adsorberharze sind in der Lage, die Salze der Anthrachinondisulfonsäure nahezu quantitativ zurückzuhalten, so daß bei der anschließenden Regenerierung der Adsorberharzschüttung über 99% dieser Salze zurückgewonnen werden. Weiterhin ist es für die Wirksamkeit der Adsorberharze unerheblich, ob in dem Waschflüssigkeits-Teilstrom noch geringe Anteile suspendierten Schwefels vorhanden sind. Diese werden in der Schüttung lediglich vorübergehend eingangsseitig abgelagert, um bei der anschließenden Regenerierung wieder mit fortgetragen zu werden. Eine absolut quantitative Befreiung der Waschflüssigkeit von dem während der Waschreaktionen freigesetzten elementaren Schwefel ist somit nicht erforderlich.

Als besonders wirksam im Sinne einer möglichst quantitativen Zurückhaltung der Salze der Anthrachinondisulfonsäure haben sich makroporöse Adsorberharze beispielsweise auf der Basis von Polystyrol erwiesen.

Ein weiterer Vorteil des Verfahrens gemäß der Erfindung liegt darin, daß die Regenerierung der Adsorberharzschüttung auf besonders einfache Weise möglich ist und gleichzeitig weitgehend in das Gesamtverfahren integriert werden kann. Eine nahezu vollständige Rückgewinnung der Salze der Anthrachinondisulfonsäure ist beispielsweise dadurch erreichbar, daß das mit den Salzen beladene Adsorberharz durch Hindurchleiten von Wasser regeneriert wird. Diese Art der Regenerierung ist vom Kostenstandpunkt ersichtlich besonders wenig aufwendig, zumal Wasser in Form von Kondensat im Zuge des Gesamtverfahrens sowieso benötigt wird. Die durch diese Regenerierung erhaltene salzhaltige wäßrige Lösung wird zweckmäßig dem Hauptstrom der Waschflüssigkeit beigemengt und in die Wäsche zurückgeführt. Die Menge des zur Regenerierung einer Schüttung jeweils verwendeten Wassers soll dabei höchstens gleich

derjenigen Menge des Waschflüssigkeits-Teilstromes sein, die zuvor bis zum Durchbruch der Salze der Anthrachinondisulfonsäure durch die Adsorberharzschüttung hindurchgeleitet wurde. Eine derartige Menge genügt, wie sich gezeigt hat, zur nahezu quantitativen Regenerierung des Adsorberharzes. Im Sinne einer möglichst weitgehenden Integrierung in das Gesamtverfahren wird es zweckmäßig sein, wenn die Menge des zur Regenerierung verwendeten Wassers, das nach Aufnahme der Salze in die Wäsche zurückgeführt wird, gleich der Menge des abgezweigten Waschflüssigkeits-Teilstromes ist.

Gemäß einer weiteren Ausgestaltung der Erfindung soll der Waschflüssigkeits-Teilstrom nach Durchlaufen der Adsorberharzschüttung einer Verbrennung zugeführt werden, wie dies beim bekannten Verfahren hinsichtlich des ausgeschleusten Waschflüssigkeitsanteiles an sich ebenfalls bereits vorgesehen ist, allerdings ohne Vorbehandlung zum Zwecke der Abtrennung der Salze der Anthrachinondisulfonsäure. In weiterer Abweichung vom bekannten Verfahren, bei dem die Hochtemperatur-Hydrolyse nur bis zur Stufe des Natriumsulfats führt, soll hier bei der Verbrennung ein kohlenmonoxidreiches Brenngas verwendet werden, so daß die unerwünchten, durch die Nebenreaktionen in der Wäsche gebildeten Thiosulfate und Sulfate zum Carbonat umgesetzt werden. Die nach der Verbrennung zurückbleibende, carbonathaltige Lösung soll dann zur Regenerierung der Adsorberharzschüttung verwendet sowie anschließend mit dem Hauptstrom der Waschflüssigkeit wiedervereinigt werden. Der bei der Verbrennung freigesetzte gasförmige Schwefelwasserstoff wird zweckmäßig, wie dies beim bekannten Verfahren ebenfalls bereits vorgesehen ist, in das zu behandelnde Gas oder Gasgemisch zurückgeführt. Bei dieser Verfahrensweise sind die Abtrennung der Salze der Anthrachinondisulfonsäure von dem abgezweigten Waschflüssigkeits-Teilstrom, die Wiedergewinnung dieser Salze sowie die Vernichtung der unerwünschten Reaktionsprodukte so weitgehend wie nur möglich in das Gesamtverfahren integriert.

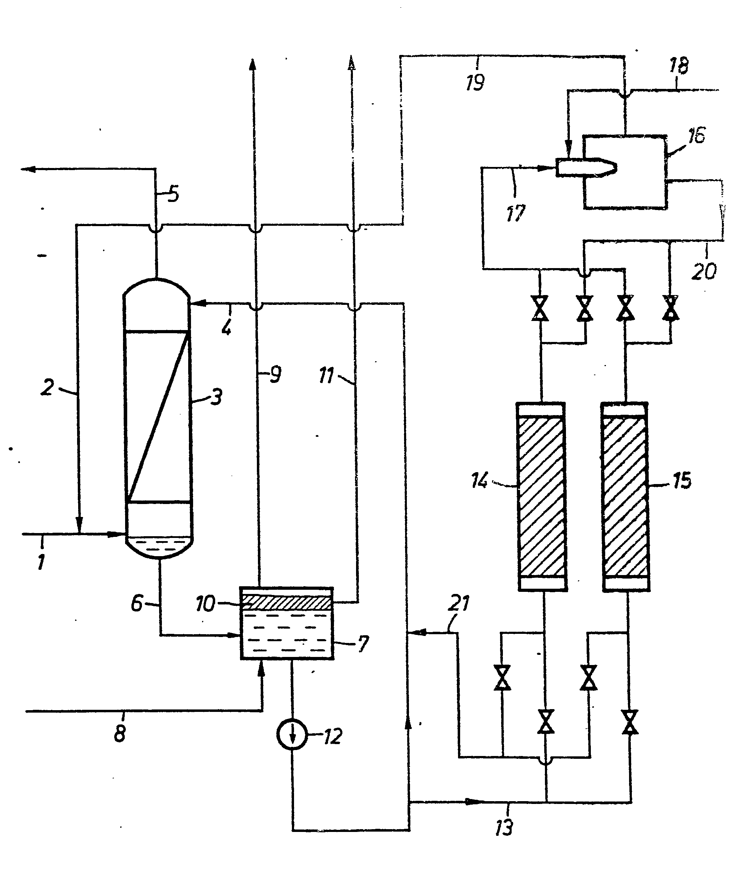

In der Figur ist in schematischer Weise ein Ausführungbeispiel des Verfahrens gemäß der Erfindung dargestellt.

Ein von Schwefelwasserstoff zu befreiendes Gasgemisch wird über eine Leitung 1 herangeführt, mit einem aus Leitung 2 zugespeisten, schwefelwasserstoffreichen Rückführgasstrom vereinigt und in eine Waschsäule 3 eingeführt. Auf den Kopf der Waschsäule wird über eine Leitung 4 Waschflüssigkeit aufgegeben, die aus einer wäßrigen, durch Zugabe von Natriumcarbonat alkalischen Lösung des Natriumsalzes der Anthrachinondisulfonsäure besteht und außerdem Zusätze von Natriummetavanadat enthält. Das innerhalb der Waschsäule 3 aufsteigende Gasgemisch wird im innigen Kontakt mit der Waschflüssigkeit, der beispielsweise durch übereinander angeordnete hölzerne Lattenroste hergestellt wird, vom Schwefelwasserstoff befreit und über eine Leitung 5 vom Kopf der Waschsäule abgezogen. Der zunächst physikalisch gelöste Schwefelwasserstoff wird durch eine sehr schnell stattfindende Reaktion mit dem Natriumcarbonat zu Natriumhydrogensulfid umgesetzt und anschließend in einer etwas langsamer ablaufenden Reaktion mit Hilfe des Natriummetavanadats zu elementarem Schwefel oxidiert. Auf diese Weise reduziertes Natriummetavanadat wird durch das vorhandene Natriumsalz der Anthrachinondisulfonsäure unter gleichzeitiger Reduktion dieses Salzes rückoxidiert. Diese Reaktionen spielen sich in der flüssigen Phase ab, wobei die Bildung des Natriumhydrogensulfids bereits im Bereich des Gas-Flüssigkeits-Gegenstromkontakts stattfindet, während die übrigen Reaktionen such noch im Sumpf der Waschsäule bzw. in einem diesem nachgeschalteten, nicht dargestellten Verweilbehälter ablaufen.

Die unter anderem reduziertes Natriumsalz der Anthrachinondisulfonsäure sowie elementaren Schwefel in suspendierter Form enthaltende Sumpfflüssigkeit wird über eine Leitung 6 abgezogen und in einen Oxidationsbehälter 7 eingeführt. In diesen wird gleichzeitig über eine Leitung 8 Luft eingespeist, die der Rückoxidation des Natriumsalzes der Anthrachinondisulfonsäure dient. Überschüssiger Sauerstoff sowie der Luftstickstoff werden aus dem Oxidationsbehälter über eine Leitung 9 abgezogen. Der sich auf dem Flüssigkeitsspiegel ansammelnde Schwefel wird über eine Leitung 11 abgezogen und der Speicherung oder weiteren Verarbeitung zugeführt. Die so regenerierte Waschflüssigkeit wird mittels einer Pumpe 12 vom Boden des Oxidationsbehälters abgeführt und auf den Kopf der Waschsäule 3 zurückgepumpt.

Da die in der Flüssigkeitsphase durch unvermeidbare Nebenreaktionen gebildeten unerwünschten Salze Natriumthiosulfat sowie Natriumsulfat, die in der umlaufenden Waschflüssigkeit in einer Konzentration von größenordnungsmäßig höchstens etwa 20 Gew.-% vorhanden sein dürfen, zu einem entsprechenden Anteil regelmäßig ausgeschleust werden müssen, ist eine Zweigleitung 13 vorgesehen, über die ständig ein Teilstrom der Waschflüssigkeit abgezweigt wird. Dieser wird einer aus zwei umschaltbaren Behältern 14, 15 bestehenden Adsorptionsanlage zugeführt. Die Behälter sind mit Schüttungen aus makroporösen Adsorberharzen ausgestattet, durch die das Natriumsalz der Anthrachinondisulfonsäure zurückgehalten wird. Gegenüber den unerwünschten Thiosulfaten und Sulfaten des Natriums zeigt die Schüttung keinerlei Adsorptionswirkung. Diese gelangen somit quantitativ über eine Leitung 17 in eine Brennkammer 16, in der sie unter Zufuhr eines kohlenmonoxidreichen Brenngases zu Natriumcarbonat abgebaut werden. Das Brenngas wird durch eine Leitung 18 eingespeist, der durch die Verbrennung entstehende gasförmige Schwefelwasserstoff durch eine Leitung 19 abgeführt und über Leitung 2 in das zu behandelnde Gasgemisch zurückgegeben. Durch diese Verfahrensweise kann der im zugeführten Schwefelwasserstoff insgesamt enthaltene Schwefel quantitativ in elementarer Form gewonnen werden.

Die aus der Verbrennung resultierende Flüssigkeit, die eine wäßrige Lösung von umgesetztem Natriumsulfat und Natriumvanadat darstellt, gelangt durch eine Leitung 20 in denjenigen der beiden Behälter 14 bzw. 15, der zu regenerieren ist. In diesem nimmt die Flüssigkeit das abgelagerte Natriumsalz der Anthrachinondisulfonsäure auf und wird anschließend über eine Leitung 21 mit dem Hauptstrom der Waschflüssigkeit wiedervereinigt und auf den Kopf der Waschsäule 3 zurückgegeben.

Die am Kopf der Waschsäule 3 durch Leitung 4 aufzugebende Waschflüssigkeit kann beispielsweise folgende Zusammensetzung haben: 0,3 Gew.-% Natriumsalz der Anthrachinondisulfonsäure, 0,13 Gew.-% Natriummetavanadat, 0,4 Gew.-% Natriumtartrat, 0,4 Gew.-% Natriumcarbonat, 2,6 Gew.-% Natriumhydrogencarbonat, 12 Gew.-% Natriumthiosulfat, 9 Gew.-% Natriumsulfat und im übrigen Wasser.

Die Wirksamkeit makroporöser Adsorberharze hinsichtlich der Abtrennung der Salze der Anthrachinondisulfonsäure kann bereits im Labormaßstab auf einfache Weise bestätigt werden. Wird eine Waschflüssigkeit der obengenannten Zusammensetzung beispielsweise durch eine mit 500 ml makroporösen Adsorberharzes auf der Basis von Polystyrol beschickte Säule geleitet, so beträgt das Waschflüssigkeitsvolumen bis zum Durchbruch des Salzes der Anthrachinondisulfonsäure ca. 8500 ml. Die übrigen Komponenten passieren die Schüttung nahezu quantitativ.

Wird die Schüttung im Gegenstrom mit ebenfalls 8500 ml Wasser von 25°C regeneriert, so lassen sich dadurch über 99% des anfangs zugeführten Salzes der Anthrachinondisulfonsäure zurückgewinnen.

**Patentansprüche**

1. Verfahren zur Rückgewinnung der Salze der Anthrachinondisulfonsäure aus einem Waschflüssigkeits-Teilstrom, der bei der Behandlung schwefelwasserstoffhaltiger Gase oder Gasgemische mit einer als Waschflüssigkeit zur Schwefelwasserstoffabtrennung dienenden alkalischen Lösung dieser Salze im Anschluß an die Regenerierung der Lösung vom Hauptstrom der Waschflüssigkeit abgezweigt wird, um unerwünschte Produkte von Nebenreaktionen auszuschleusen, dadurch gekennzeichnet, daß der abgezweigte Waschflüssigkeits-Teilstrom unter selektiver Zurückhaltung der Salze der Anthrachinondisulfonsäure durch eine Schüttung makroporösen Adsorberharzes hindurchgeleitet wird.

2. Verfahren nach Anspruch 1, dadurch gekennzeichnet, daß makroporöse Adsorberharze auf der Basis von Polystyrol verwendet werden.

3. Verfahren nach Anspruch 1 oder 2, dadurch gekennzeichnet, daß das mit den Salzen der Anthrachinondisulfonsäure beladene Adsorberharz durch Hindurchleiten von Wasser regeneriert und die dabei erhaltene salzhaltige wäßrige Lösung dem Hauptstrom der Waschflüssigkeit beigemengt wird.

4. Verfahren nach Anspruch 3, dadurch gekennzeichnet, daß die Menge des zur Regenerierung einer Schüttung jeweils verwendeten Wassers höchstens gleich derjenigen Menge des Waschflüssigkeits-Teilstromes ist, die zuvor bis zum Durchbruch der Salze der Anthrachinondisulfonsäure durch die Adsorberharzschüttung hindurchgeleitet wurde.

5. Verfahren nach Anspruch 1 oder 2, dadurch gekennzeichnet, daß der Waschflüssigkeits-Teilstrom nach Durchlaufen der Adsorberharzschüttung einer Verbrennung unter Verwendung eines kohlenmonoxidreichen Brenngases zugeführt wird, in der die unerwünschten, durch die Nebenreaktionen gebildeten Thiosulfate und Sulfate zum Carbonat umgesetzt werden, der dabei freigesetzte Schwefelwasserstoff in das zu behandelnde Gas oder Gasgemisch zurückgeführt und die nach der Verbrennung zurückbleibende, carbonathaltige Lösung zur Regenerierung der Adsorberharzschüttung verwendet sowie anschließend mit dem Hauptstrom der Waschflüssigkeit wiedervereinigt wird.

**Claims**

1. A process for recovering anthraquinone disulphonic acid salts from a sub-stream of washing liquid which, during the treatment of hydrogen sulphide-containing gases or gas mixtures with an alkaline solution of these salts which serves as a washing liquid to separate the hydrogen sulphide, is branched off from the main stream of the washing liquid after the regeneration of the solution, in order to discharge undesired products of sidereactions, characterised in that the sub-stream of washing liquid which has been branched off, is led through a charge of macroporous adsorber resin for selectively retaining the anthraquinone disulphonic acid salts.

2. A process as claimed in Claim 1, characterised in that macroporous adsorber resins having a polystyrene basis are used.

3. A process as claimed in Claim 1 or Claim 2, characterised in that the adsorber resin charged with the anthraquinone disulphonic acid salts is regenerated by flushing with water, and the aqueous solution containing the salts which is thereby obtained, is added to the main stream of the washing liquid.

4. A process as claimed in Claim 3, characterised in that the quantity of water used to regenerate a charge is always at most equal to the quantity of the washing liquid sub-stream which has previously been led through the adsorber resin charge up to break-through of the anthraquinone disulphonic acid salts.

5. A process as claimed in Claim 1 or Claim 2, characterised in that, after having passed through the adsorber resin charge the washing liquid sub-stream is led to a combustion step using a fuel gas rich in carbon monoxide, in which the undesired thiosulphates and sulphates produced by side-reactions are converted into carbonates, the hydrogen sulphide thereby released is returned to the gas or gas mixture which is to be treated, and the carbonate-containing solution which remains after the combustion step, is used to regenerate the adsorber resin charge and is subsequently reunited with the main stream of the washing liquid.

## Revendications

1. Procédé de récupération des sels de l'acide anthraquinone disulfonique à partir d'une fraction de liquide de lavage prélevée, après régénération, sur un courant principal de liquide de lavage, formé d'une solution alcaline de ces sels et ayant été utilisé pour la séparation de l'hydrogène sulfuré contenu dans un gaz ou mélange de gaz pour empêcher le passage de produits indésirables des réactions secondaires, ce procédé étant caractérisé en ce que la fraction de liquide de lavage prélevée est passée sur une masse de résine adsorbante macroporeuse permettant la rétention sélective des sels de l'acide anthraquinone disulfonique.

2. Procédé selon la revendication 1, caractérisé en ce que l'on utilise une résine adsorbante macroporeuse à base de polystyrol.

3. Procédé selon les revendications 1 ou 2, caractérisé en ce que l'on régénère la résine adsorbante chargée de sels de l'acide anthraquinone disulfonique par passage d'eau et en ce que l'on combine la solution aqueuse saline ainsi obtenue avec le courant principal de liquide de lavage.

4. Procédé selon la revendication 3, caractérisé en ce que la quantité de liquide employée pour la régénération d'une masse de résine est au plus égale à la quantité de la fraction du courant de liquide de lavage, qui traverse la masse de résine adsorbante jusqu'au passage des sels de l'acide anthraquinone disulfonique.

5. Procédé selon les revendications 1 ou 2, caractérisé en ce qu'après passage dans la masse de résine adsorbante, la fraction du courant de liquide de lavage subit une calcination, en présence de gaz de combustion chargé de monoxyde de carbone, au cours de laquelle les thiosulfate et sulfate formés au cours des réactions secondaires sont transformés en carbonate, en ce que l'on ramène l'hydrogène sulfuré ainsi épuré dans le gaz ou mélange gazeux à traiter et en ce qu'on utilise la solution carbonatée, résultant de la combustion, pour régénérer la charge de résine adsorbante puis la réunir au courant principal de liquide de lavage.